# EUROPÄISCHE PATENTSCHRIFT

(11) **EP 1 215 063 B1**
(45) Veröffentlichungstag und Bekanntmachung des Hinweises auf die Patenterteilung: **13.09.2006**
(21) Anmeldenummer: 01129145.7
(22) Anmeldetag: 08.12.2001
(51) Int. Cl.: B60J 1/20

(54) **Fensterrollo mit vereinfachter Montage**
Window roller blind with simplified assembly
Store à enrouler de fenêtre avec montage simplifié

(30) Priorität: 16.12.2000 DE 10062690
(43) Veröffentlichungstag der Anmeldung: 19.06.2002
(60) Teilanmeldung: 06005841.9
(73) Patentinhaber: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Rüger, Barthelt & Abel Patentanwälte

(56) Entgegenhaltungen:
- EP-A- 1 209 013
- EP-A- 1 211 109
- EP-A- 1 211 110
- DE-A- 19 530 310
- US-A- 4 758 041
- US-A- 4 836 263
- US-A- 5 201 810
- US-A- 6 086 133
- US-A- 6 095 231

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet.

Hierzu ist es aus der nächstkommenden US-A-5201810 bekannt, vor dem Heckfenster zwei Führungsschienen vorzusehen, in denen der Zugstab der Rollobahn geführt ist. Die Betätigung geschieht durch die in den Führungsschienen laufenden Schubglieder.

Die Führungsschienen für derartige Fensterrollos sind durchaus filigrane Gebilde. Sie bestehen aus Leichtmetall und sind folglich sehr empfindlich gegen Verbiegen. Bereits kleine Kräfte genügen, um sie zu zerstören, solange sie nicht an einem stabilen tragenden Teil befestigt sind.

Es ist deswegen schwierig, die Führungsschienen im Fahrzeug einwandfrei zu montieren.

Darüber hinaus müssen die Führungsschienen lagerichtig zur Wickelwelle, beziehungsweise die Wickelwelle lagerichtig zu den Führungsschienen montiert werden. Erst nach dem Anbringen der Wickelwelle und der Führungsschienen kann der Zugstab in die Führungsschienen eingefädelt werden.

Bei der Montage am Band treten erhebliche Schwierigkeiten auf, um diese filigrane Arbeit auszuführen.

Ausgehend hiervon ist es Aufgabe der Erfindung, die Montage des Fensterrollos am Band bei der Fertigung des Kraftfahrzeugs wesentlich zu erleichtern und/oder eine gut verdeckte Anordnung der Führungsschienen zu erzielen, damit sie optisch möglichst wenig störend in Erscheinung treten und gegen Beschädigung geschützt sind.

Diese Aufgabe wird erfindungsgemäß durch das Fensterrollo mit den Merkmalen des Anspruches 1 oder die Karosserie bzw. Tür für ein Kraftfahrzeug mit den Merkmalen des Anspruches 32 gelöst.

Die erhebliche Montagevereinfachung ergibt sich, weil die Lagermittel für die Wickelwelle über ein Verbindungsmittel aneinander befestigt sind, so dass insoweit eine Vormontage möglich ist. Es ist nicht mehr erforderlich bei der Montage am Band die Einzelteile des Rollos lagerichtig zueinander zu montieren und die beweglichen Teile einzufädeln, um das funktionsfähige Fensterrollo zu erhalten. Vielmehr können herstellerseitig bereits diese Teile zusammen montiert werden, was die Montage am Band vereinfacht, weil lediglich eine vormontierte Baueinheit eingesetzt werden muss.

Die Führungsschienen sind zweiteilig ausgeführt sein. Der eine Teil ist fest mit den Lagermitteln verbunden, während der andere Teil jeder Führungsschiene durch Stecken mit dem ersten Teil zusammengefügt werden kann. Eine weitere Möglichkeit besteht darin, die beiden Teile jeder Führungsschiene über ein Scharnier miteinander zu verbinden. Das Scharnier kann ein Scharnier mit Scharnierachsstifte oder ein Filmscharnier bzw. eine Sollbiegestelle sein.

Dabei können die Verbindungsmittel und/oder die Lagermittel mit entsprechenden Maßnahmen versehen sein, um diese Teile im Fahrzeug zu befestigen.

Die Montage lässt sich noch weiter vereinfachen, wenn die Baueinheit zusätzlich den Antriebsmotor und die Führungsrohre für die Antriebsglieder aufweist. Schließlich ist eine nahezu vollständige Vorfertigung der Baueinheit möglich, wenn die Baueinheit zusätzlich noch die Führungsschienen oder zumindest einen Abschnitt von Ihnen trägt. Dadurch ist eine vollständige Vormontage seitens des Herstellers des Fensterrollos möglich.

Die Verwendung eines Scharniers gestattet es eine sehr kompakte Baueinheit zu erreichen, die an das Band geliefert wird. Durch Abnehmen oder Einfalten der betreffenden Teile der Führungsschienen, wird eine Baueinheit erhalten, von der keine Teile ausladend wegstehen.

Da das Scharnier praktisch nur zweimal betätigt wird, nämlich im Sinne des Einfaltens nach der herstellerseitigen Montage und dem Sinne des Aufrichtens bei der Montage im Fahrzeug, kann das Scharnier auch durch Sollbiegestellen gebildet sein, die auch als Filmscharnier angesehen werden können. So besteht die Möglichkeit auch bei der Verwendung von Führungsschienen aus Aluminiumstrangpressprofil die Führungsschienen von der Rückseite her mehrfach einzuschneiden. Auf Grund der Einschnitte bleiben auf der Seite des Schlitzes neben diesem zwei schmale Materialstege stehen, die ohne zu brechen einige Male hin und her gebogen werden können. Die Verwendung von mehreren Einschnitten reduziert das an einem Stegpaar auftretende Maß der Verbiegung beim Einklappen des betreffenden Führungsschienenabschnitts.

Die Führungsschienen sind zweckmäßigerweise dazu eingerichtet stoff- oder formschlüssig mit der Fahrzeugkarosserie verbunden zu werden. Hierzu können sie entweder mit Klebeflächen versehen sein oder mit flanschförmigen Stegen, die zum Anschrauben oder zum Verkleben geeignet sind. Denkbar ist auch eine Verbindung über Nieten, beispielweise Blindnieten.

Wenn die betreffende Führungsschiene mit einem Befestigungsflansch versehen ist, kann der Flansch auch zwischen der Scheibe und der Karosserie eingeklebt werden.

Der Antrieb der Rollobahn geschieht zweckmäßigerweise über Antriebsglieder, die vorzugsweise formschlüssig mit einem Elektromotor gekuppelt sind. Dadurch ist über eine lange Betriebszeit ein Synchronantrieb beider Enden des Zugstabs gewährleistet. Die Antriebsglieder sind linienförmige Elemente, die an der Außenseite mit einer Verzahnung versehen sind. Die Verzahnung wird durch eine umlaufende schraubenförmige Rippe gebildet.

Die Führung der Antriebsglieder zu den Führungsschienen geschieht in Rohren, um bei Schubgliedern ein Ausknicken zu vermeiden. Die Anordnung ähnelt einem Bowdenzug.

Bei einer sehr einfachen Ausführungsform können die Führungsrohre dasselbe Querschnittsprofil wie die Führungsschienen haben und sie können sogar einstückig in einander übergehen.

Im übrigen sind Weiterbildungen der Erfindung Gegenstand von Unteransprüchen. Dabei sollen auch solche Merkmalskombinationen als beansprucht gelten, für die es kein explizites Ausführungsbeispiel gibt.

In der Zeichnung sind Ausführungsbeispiele des Gegenstandes der Erfindung dargestellt. Es zeigen:
- Fig. 1: einen Pkw in einer Rückansicht unter Veranschaulichung eines erfindungsgemäßen ausgezogenen Heckscheibenrollos,
- Fig. 2: den prinzipiellen Aufbau des Heckscheibenrollos nach Fig. 1, in einer Draufsicht,
- Fig. 3: die Führungsschiene des Heckscheibenrollos nach Fig.1, in einem Querschnitt,
- Fig. 4: das Zusammenwirken der Einzelteile und den Antrieb des Heckscheibenrollos nach Fig. 1, in einer einfachen schematisierten Darstellung,
- Fig. 5: die vormontierte Einheit aus Wickelwelle, Lagerböcken, Rollobahn und Zugstab, in einer abgebrochenen perspektivischen Darstellung, wobei die Führungsschiene zum Zusammenstecken vorgesehen ist,
- Fig. 6: die vormontierte Einheit aus Wickelwelle, Lagerböcken, Rollobahn und Zugstab, in einer abgebrochenen perspektivischen Darstellung, wobei die Führungsschiene mit einem Scharnier versehen ist,
- Fig. 7: die vormontierte Einheit aus Wickelwelle, Lagerböcken, Rollobahn und Zugstab, in einer abgebrochenen perspektivischen Darstellung, wobei die Führungsschiene mit einer Sollbiegestelle versehen ist,
- Fig. 8: die vormontierte Einheit aus Wickelwelle, Lagerböcken, Rollobahn und Zugstab, in einer abgebrochenen perspektivischen Darstellung, wobei ein Teil der Führungsschiene in einem Teil der Innenverkleidung ausgebildet ist,
- Fig. 9 bis 13: unterschiedliche Verbindungen zwischen der Führungsschiene und der Karosserie, und
- Fig. 14: die vormontierte Einheit aus Wickelwelle, Lagerböcken, Rollobahn und Zugstab, in einer abgebrochenen perspektivischen Darstellung, unter Veranschaulichung der Montage auf dem Fensterflansch.

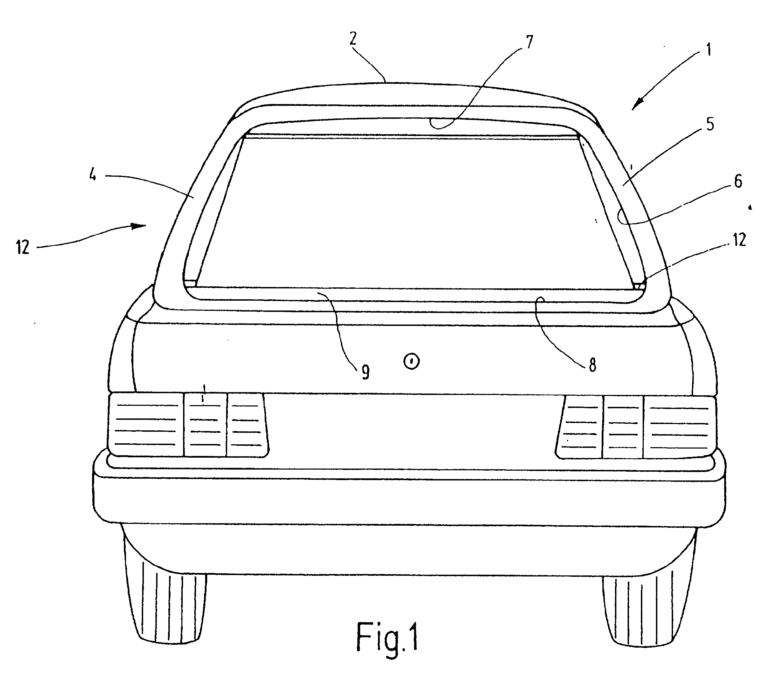

Fig. 1 zeigt in einer schematischen Darstellung die Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterunterkante 8 begrenzt ist. In der Heckfensteröffnung 6 sitzt in bekannter Weise, beispielsweise mittels Klebemasse eingeklebt, eine Heckscheibe 9.

Im Inneren des Pkw 1 befindet sich vor der Innenseite der Heckscheibe 9 eine Hutablage 11, die sich zwischen der Fensterunterkante 8 und einer in der Figur nicht erkennbaren Rücksitzlehne horizontal erstreckt. In der Hutablage 9 verläuft ein gerader Auslaufschlitz 12.

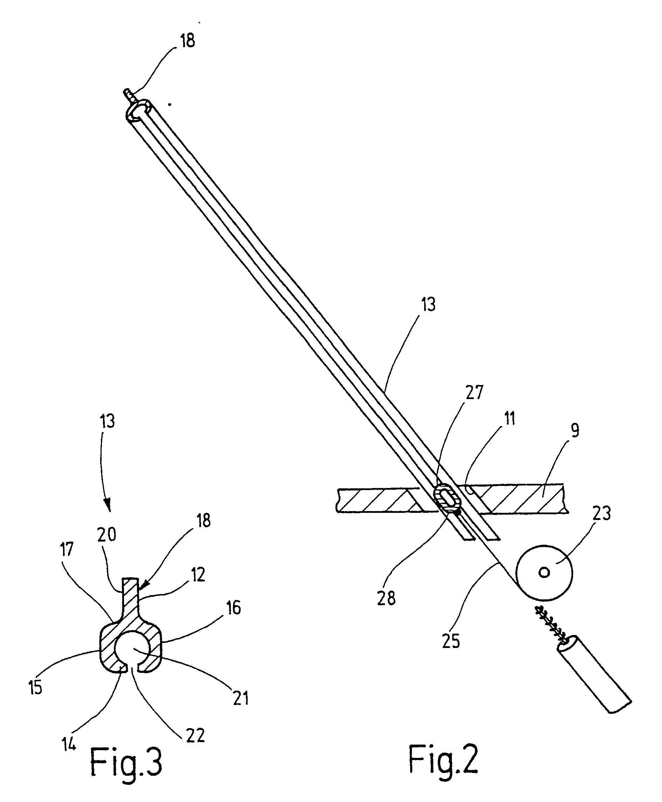

Der Auslaufschlitz 12 gehört zu einem Heckfensterrollo 13, dessen prinzipieller Aufbau in Fig. 2 stark schematisiert in einer Draufsicht veranschaulicht ist.

Das Heckfensterrollo 12, weist zwei Führungsschienen 13 auf, die neben den seitlichen Rändern der Heckfensteröffnung 6 an den beiden C-Säulen 4 und 5 befestigt sind. Wegen der aufgeschnittenen Prinzipdarstellung ist in Fig. 2 lediglich eine Führungsschiene 13 zu erkennen, die beispielsweise an der C-Säule 5 befestigt ist. Die erfindungsgemäße Art der Befestigung ist weiter unten im Einzelnen erläutert.

Die Führungsschiene 13 weist das in Figur 3 gezeigte Querschnittsprofil auf. Sie ist im Querschnitt im Wesentlichen quadratisch mit abgerundeten Ecken und wird von einer Vorderseite 14, zwei seitlichen Wänden 15 und 16 sowie einer Rückseite 17 begrenzt. Von der Rückseite 17 geht ein leistenartiger Befestigungsflansch 18 aus, mit dessen Hilfe die Führungsschiene 13 an entsprechenden Karosserieteilen zu befestigen ist. Den Flansch 18 begrenzen zwei zueinander parallele Flächen 19 und 20, deren Erzeugende eine Gerade ist, die rechtwinkelig zu der Längsachse der Führungsschiene 13 liegt.

In der Führungsschiene 13 ist eine im Querschnitt kreisförmige Führungsnut 21 enthalten, die sich über einen Schlitz 22 zu der Vorderseite 14 hin öffnet.

Die Führungsschiene 13 besteht beispielsweise aus einem Aluminiumstrangpressprofil.

Da der Schlitz 22 schmäler ist als der Durchmesser des kreisförmigen Abschnitts der Führungsnut 21, entsteht eine hintergriffige Nut, die geeignet ist ein linienförmiges Schubglied gegen Ausknicken zu schützen und das Schubglied bei entsprechendem Durchmesser daran zu hindern, durch den Schlitz 22 nach außen auszutreten.

Die Führungsschienen 13 sind bzgl. mehrerer Achsen gebogen, damit sie der Kontur der Fensterkante folgen ohne in dem Fenster selbst sichtbar zu werden. Die Führungsschienen 13 sind so angeordnet, dass die Nuten 21 sich in Richtung aufeinander zu öffnen.

Die Führungsschienen 13 laufen nach unten, wie Figur 2 erkennen läßt, durch den Schlitz 11 bis unterhalb der Hutablage 9.

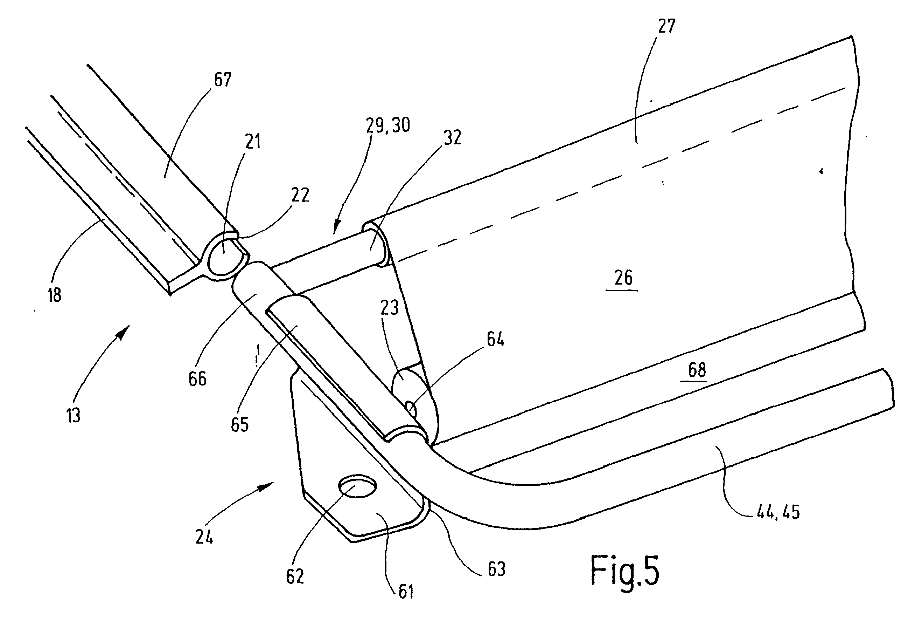

Unterhalb der Hutablage 9 ist, wie Figur 2 schematisch zeigt, eine Wickelwelle 23 drehbar gelagert. Lagerböcke zum Lagern der Wickelwelle 23 sind in Fig. 5 bei 24 gezeigt.

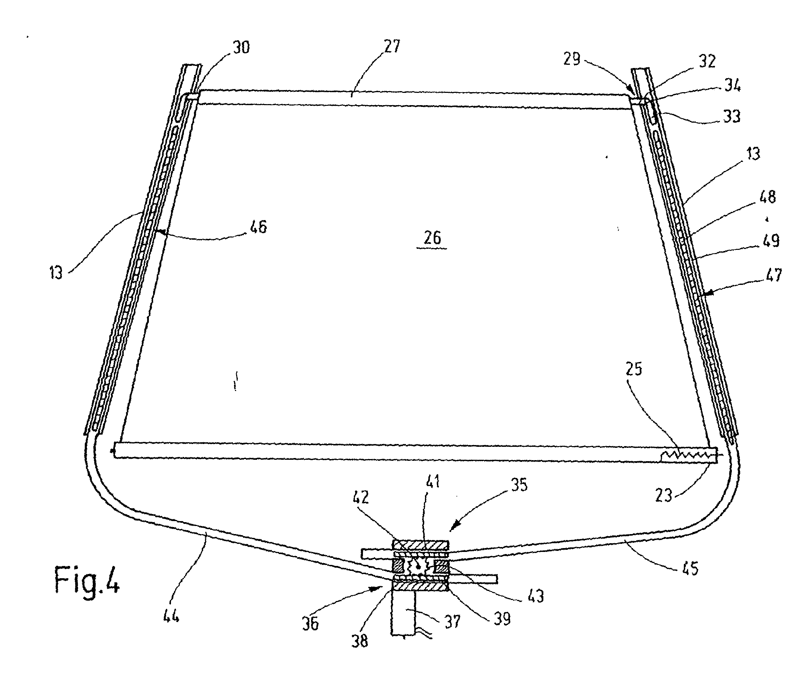

Die Wickelwelle 23 ist rohrförmig und beherbergt einen Federmotor 25, der in Fig. 4 schematisiert dargestellt ist. Der Federmotor 25 besteht aus einer Schraubenfeder, die mit einem Ende im Inneren der Wickelwelle 23 festgelegt ist und anderenends an einem der Lagerböcke 24 zum Lagern der Wickelwelle 23 verankert ist.

An der Wickelwelle 23 ist mit einer Kante eine Rollobahn 26 befestigt, deren Zuschnitt eine trapezförmige Annäherung der Kontur des Heckfensters 6 ist. Die von der Wickelwelle 23 abliegende Kante ist zu einer schlauchförmigen Schlaufe 26 geformt, in der ein Zugstab 27 sitzt.

Zu dem Zugstab 28 gehören im Wesentlichen ein durch die Schlaufe 27 verdecktes Mittelstück sowie zwei gegenüber dem Mittelstück teleskopartig bewegliche Endstücke 29 und 30.

Das Mittelstück ist ein ovales Rohr mit einem konstanten Querschnitt, jeweils über die Länge gesehen. Die Länge des Rohres entspricht der Länge der schlauchförmigen Schlaufe 27 und damit der entsprechenden Kante der Rollobahn 26.

Die Endstücke 29 und 30 haben eine L-förmige Gestalt und setzt sich aus einem Arm 32 und einem Führungsstück 33 zusammen. Der Arm 32 hat einen solchen Querschnitt, dass er in dem Innenraum des besagten Rohres weitgehend spielfrei längsverschieblich ist. Sein außenliegendes Ende geht bei 34 einstückig in das Führungsstück 33 über, das im Querschnitt an den kreisförmigen Teil der Führungsnut 21 angepasst ist, während die Breite des Armes 32 der Weite des Schlitzes 22 entspricht.

Die beiden Endstücke 29 und 30 sind hinsichtlich des Armes 32 und des Führungsstücks 33 gleich gestaltet.

Um die Rollobahn 24 auszufahren ist eine Antriebseinrichtung 35 vorgesehen, die in Figur 4 stark schematisiert gezeigt ist. Zur Vereinfachung der Darstellung und zur Erläuterung des Verständnisses der Erfindung sind die beiden seitlichen Führungsschienen 13 in Figur 4 geschnitten gezeigt. Die beiden Führungsnuten 21 öffnen sich in Richtung aufeinander zu.

Zu der Antriebseinrichtung 35 gehört ein Getriebemotor 36, der sich aus einem permanent erregten Gleichstrommotor 37 und einem Getriebegehäuse 38 zusammensetzt. In dem Getriebegehäuse 38 sind parallel zueinander zwei Führungskanäle 39 und 41 enthalten, zwischen denen auf einer Ausgangswelle 42 ein Ausgangszahnrad 43 vorgesehen ist. Das Ausgangszahnrad 43 kann über die damit drehfest verbundene Ausgangswelle 42 wahlweise in beiden Drehrichtungen in Gang gesetzt werden.

Von dem Führungskanal 39 geht ein Führungsrohr 44 zu dem unteren Ende der Führungsnut 21 in der linken Führungsschiene 13. Der Führungskanal 41 ist am rechten Ende über ein Führungsrohr 45 mit dem unteren Ende der Führungsnut 21 in der rechten Führungsschiene 13 verbunden.

Sowohl durch den Führungskanal 39 als auch durch den Führungskanal 41 verläuft jeweils ein biegeelastisches, linienförmiges Schubglied 46 bzw. 47. Der jeweils nicht benutzte Teil der Schubglieder 46, 47 wird in Speicherrohre zurückgeschoben, die von dem jeweils anderen Ende der Führungskanäle 39, 41 ausgehen.

Die beiden Schubglieder 46 und 47 haben denselben Aufbau. Sie bestehen jeweils aus einer elastisch biegsamen Seele 48, der auf seiner Außenseite eine oder mehrere Rippen 49 trägt, die dort ein ein- oder mehrgängiges Gewinde bilden. Die Rippen 49 stehen radial vor und laufen schraubenförmig über die zylindrische Seele 48 von einem Ende des Schubglieds bis zum anderen Ende. Das Ausgangszahnrad 43 trägt eine Verzahnung, die zwischen die von den Rippen 49 gebildeten Nuten eingreifen kann. Auf diese Weise ist das Ausgangszahnrad 43 formschlüssig mit den Schubgliedern 46 und 47 gekuppelt.

Die Funktionsweise des beschriebenen Heckfensterrollos ist wie folgt:

In der Ruhestellung ist unter der Wirkung des Federmotors 25 die Wickelwelle 23 in eine Stellung gedreht, in der die Rollobahn 26 aufgewickelt ist. In dieser Stellung befindet sich die schlauchartige Schlaufe 27 in dem Auslaufschlitz 11. Die Führungsstücke 29, 30 liegen in der Nähe der unteren Enden der beiden Führungsschienen 13.

Gleichzeitig sind die beiden Schubglieder 46 und 47 mit ihren beiden Enden von den betreffenden Führungsgliedern 33 beabstandet.

Wenn der Benutzer ausgehend von dieser Stellung des Heckfensterrollos 13, in der der Lichteintritt in das Fahrzeuginnere überhaupt nicht beeinflusst wird, eine Abschattungswirkung erzeugen möchte, fährt er die Rollobahn 26 aus. Die Rollobahn 26 vermindert den Lichtdurchtritt ohne ihn vollständig zu unterbinden. Hierzu besteht die Rollobahn 26 beispielsweise aus einem offnen Kettengewirk oder einer gelochten und schwarz eingefärbten Kunststofffolie.

Um die Rollobahn 26 auszufahren, wird der Getriebemotor 36 mit einer solchen Drehrichtung in Gang gesetzt, dass er das Schubglied 47 nach rechts durch in die Führungsnut 21 bewegt. Da die beiden Schubglieder 46 und 47 an diametral gegenüberliegenden Seiten mit dem Ausgangszahnrad 43 kämmen, wird gleichzeitig das Schubglied 46 nach links durch die Führungsnut 21 der linken Führungsschiene 13 um den gleichen Betrag vorgeschoben. Nach einem kurzen Stück des Vorschubwegs kommen die freien Enden der beiden Schubglieder 46 und 47 mit den unteren Enden der Führungsglieder 33 der beiden Führungsstücke 29, 30 in Eingriff und schieben im weiteren Verlauf die Führungsstücke 29, 30 in Richtung auf das obere Ende der beiden Führungsschienen 13.

Da sich der Abstand zwischen den Führungsschienen 13 verändert, tauchen gleichzeitig teleskopartig die Arme 32 der Führungsstücke 29, 30 in das in der betreffenden Schlaufe 27 enthaltene formsteife Rohr des Zugstabs ein.

Sobald die Endlage erreicht ist, wird der Getriebemotor 36 stillgesetzt. Die ausgefahrene Endlage ist in den Fig. 1 und 4 gezeigt.

Der Getriebemotor 36 ist selbsthaltend und arretiert die Schubglieder 46 und 47 in der jeweils erreichten Stellung.

Das Abschalten des Getriebemotors 36 erfolgt mit Hilfe von Endschaltern oder indem die Führungsglieder 29 und 30 an Anschläge anlaufen. Es tritt ein in einer Elektronik auszuwertender Blockierstrom auf, der zum Abschalten führt.

Die Rollobahn 26 wird nunmehr zwischen dem Zugstab und der Wickelwelle 23 aufgespannt gehalten.

Zum Einfahren wird der Getriebemotor 36 mit der entgegengesetzten Drehrichtung in Gang gesetzt. Die beiden Schubglieder 46 und 47 werden nach unten aus den zugehörigen Führungsschienen 13 heraus bewegt. Gleichzeitig läuft der Zugstab mit nach unten, weil durch die Wirkung des Federmotors 25 der Wickelwelle 23 die Rollobahn 26 ständig unter Spannung gehalten wird.

Die in Figur 4 gezeigte Lösung eignet sich auch für Heckscheiben 9 die sowohl bezüglich horizontaler als auch vertikaler Krümmungsachsen gekrümmt sind.

Nachdem insoweit das Grundprinzip des Fensterrollos 12 erläutert ist, werden anhand der nachstehenden Figuren erfindungsgemäße Aspekte beschrieben, die es ermöglichen, das Fensterrollo 12 in einfacher Weise am Montageband für das Kraftfahrzeug 1 zu montieren. Dabei sind zur Erläuterung der erfindungsgemäßen Details nur Ausschnitte aus dem Fensterrollo 12 gezeigt, und zwar jene Ausschnitte, die für das Verständnis der Erfindung wesentlich sind.

Fig. 5 läßt ein Ende der Wickelwelle 23 erkennen. Die Wickelwelle 23 ist gemäß Fig. 5 zwischen zwei Lagerböcken 24 drehbar gelagert, von denen wegen der abgebrochenen Darstellung nur einer zu sehen ist. Der Lagerbock 24 besteht aus einem C-förmig gebogenen Blechstanzteil. Das Blechstanzteil bildet einen planen Befestigungsschenkel 61 mit einer Befestigungsbohrung 62 sowie einen dazu rechtwinklig verlaufenden Lagerschenkel 63, der eine verdeckte Lagerbohrung für einen Lagerzapfen 64 der Wickelwelle 23 enthält. An dem von dem Befestigungsschenkel 62 abliegenden Ende des Lagerschenkels 63 ist ein weiterer Schenkel 65 angeformt. Der Schenkel 65 dient der Befestigung der jeweiligen Führungsschiene 13.

Die Führungsschiene 13 setzt sich bei dem Ausführungsbeispiel nach Fig. 5, aus einem ersten Abschnitt 66 und einem zweiten Abschnitt 67 zusammen. Der Abschnitt 66 ist in dem Winkelbereich zwischen dem Schenkel 65 und dem Lagerschenkel 63 des Lagerstücks 61 beispielsweise durch Kleben oder sonst wie befestigt. Die Länge des Abschnittes 66 ist so gewählt, dass bei vollständig eingefahrenem Fensterrollo 12 die freie Kante, bzw. das freie Ende des Abschnittes 66, in Bewegungsrichtung beim Ausfahren gesehen, über die Führungsstücke 29 bzw. 30 übersteht.

An dem weggebrochenen Ende der Wickelwelle 23, befindet sich eine spiegelbildliche Anordnung des Lagerbocks 24, das in gleicher Weise mit dem Abschnitt 66 der Führungsschiene 13 versehen ist, in der das andere Ende des Zugstabs bzw. das andere Führungsstück 29 geführt ist.

Die beiden Lagerböcke 24 sind durch ein Rahmenrohr 68 miteinander verbunden. Das Rahmenrohr 68 ist beispielsweise beidends mit je einem der Lagerschenkel 63 verschweißt. Die Lagerschenkel 63 sind einander zugekehrt, während die Befestigungsschenkel 61 voneinander weg weisen. An dem Rahmenrohr 68 ist außerdem der Getriebemotor 35 angebracht.

Die Führungsrohre 44 und 54 gehen jeweils einstückig in die betreffenden Führungsschienenstücke 66 über, wie diese die Figur 5 erkennen lässt. Somit bestehen die Führungsrohre 44 und 45 jeweils aus einem Stück Profilrohr, das ein Innenprofil gemäß Fig. 3 hat, wobei gegebenenfalls der seitliche Flansch 18 fehlt.

Wie unschwer zu erkennen ist, bildet die Anordnung nach Fig. 5 eine, seitens des Herstellers des Fensterrollos vormontierbare Einheit. Die Einheit setzt sich zusammen aus: den Lagerböcken 24, die durch das Rahmenrohr 68 starr und im wesentlichen unbeweglich miteinander verbunden sind. Zwischen den beiden Lagerböcken 24 ist die Wickelwelle 23 drehbar gelagert, wobei sich an einem der Lagerflansche 63 zusätzlich drehfest der Federmotor 25 abstützt. Der Zugstab ist mit seinen Endstücken 29, 30 bereits in das Stück 66 in der Führungsschiene 13 eingefädelt. Mit Hilfe des Federmotors 25 werden die Arme 32 der Führungsstücke 29, 30 gegen eine Kante des Lageschenkels 63 hingezogen. Im weiteren Verlauf der Führungsschiene 13, die das Führungsrohr 44 bzw. 45 bildet, befinden sich vormontiert, die Schubglieder 46 und 47, und es ist an dem Rahmenrohr 68 der Getriebemotor 36 vormontiert.

Auf diese Weise läßt sich ohne weiteres diese Baueinheit leicht am Band in das betreffende Kraftfahrzeug einbauen, ohne dort noch die eigentliche Montage des Fensterrollos zu erfordern.

Der zweite Abschnitt 67 der Führungsschienen 13 ist getrennt und wird beispielsweise nach der Montage der oben erläuterten Baueinheit, die die Wickelwelle 23 umfasst, in der Fahrzeugkarosserie befestigt und mit dem Abschnitt 66, der Führungsschiene 13 beispielsweise über eine nicht gezeigte Verbindungsmuffe zusammengesteckt. Zuvor war der Abschnitt 67 mit Hilfe des Flansches 18 in der Fahrzeugkarosserie befestigt worden. Die Art und Weise wie dies geschieht, wird in späteren Zeichnungen erläutert.

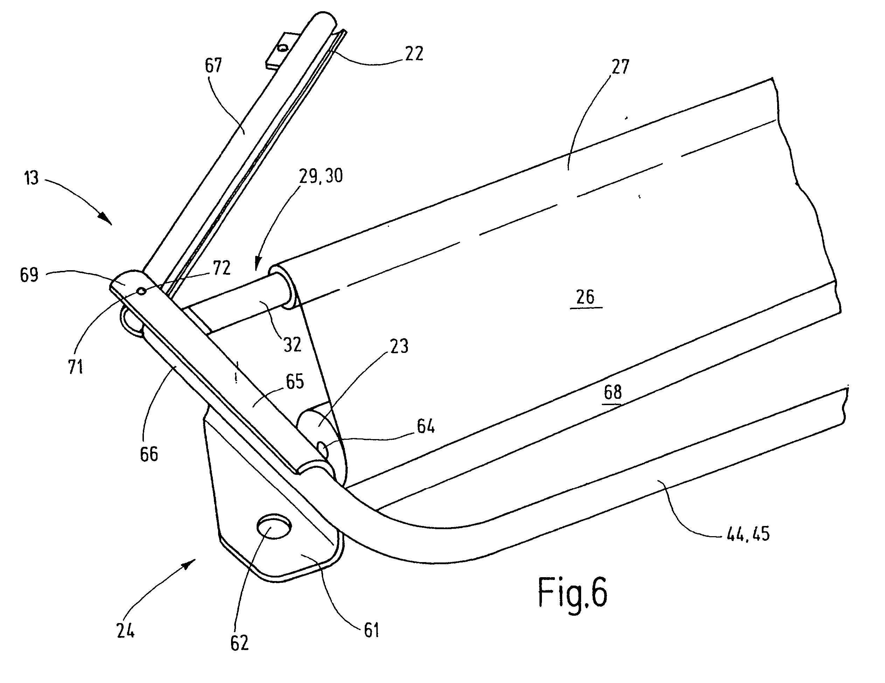

Anstatt die beiden Abschnitte 66 und 67 der betreffenden Führungsschiene 13 vollständig voneinander zu trennen und erst bei der Montage zusammenzustecken besteht auch die Möglichkeit ein Scharniergelenk vorzusehen, wie dies Figur 6 zeigt.

Soweit in dieser Figur bereits erläutert Bauelemente verwendet werden, sind sie mit denselben Bezugszeichen versehen.

Der Schenkel 65 ist über das Ende des Abschnittes 66 hinaus verlängert und bildet eine überstehende Lasche 69. Die Lasche 69 enthält eine Scharnierbohrung 71, in der ein entsprechender Scharnierzapfen 72 sitzt, der mit dem Abschnitt 67 starr und fest verbunden ist. Die Scharnierachse liegt rechtwinklig zu der Drehachse der Wickelwelle 23.

Die Baueinheit gemäß Fig. 6 wird zunächst in ähnlicher Weise vorbereitet, wie die Baueinheit nach Fig. 5. Sodann wird abschließend der Abschnitt 67 der Führungsschiene 13 anscharniert, beispielsweise in dem der Scharnierbolzen 72 an der Lasche 69 drehbar vernietet wird. Es kann nun eine Baueinheit an das Montageband geliefert werden, bei der bereits die Führungsschienen 13 zur Gänze enthalten sind.

Im Lieferzustand sind die Abschnitte 67, der Führungsschienen 13 eingefaltet und liegen parallel zu dem bereits eingefädelten Zugstab. Nach der Anbringung in der Fahrzeugkarosserie, beispielsweise indem der Befestigungsflansch 61 mit Schrauben oder Nieten angebracht ist, wozu er beispielsweise die Bohrung 62 enthält, werden die Abschnitte 67 aus der Lage parallel zu der Wickelwelle 23 in die Gebrauchsstellung geschwenkt und im Fahrzeug befestigt.

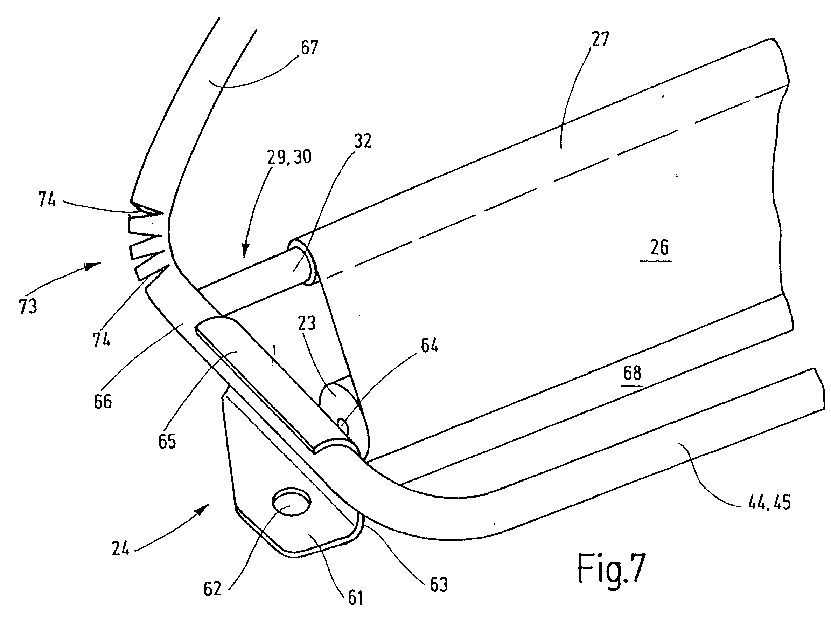

Die Verbindung zwischen dem Abschnitt 67 und dem Abschnitt 66 der Führungsschiene kann auch als Sollbiegestelle ausgeführt sein, wie dies in Fig. 7 gezeigt ist. Hierbei besteht das Scharnier aus einer Sollbiegestelle 73. Die Sollbiegestelle 73 wird erzielt, indem das Profil der Führungsschiene 13 von der Rückseite wie gezeigt mit mehreren Einschnitten 74 versehen wird, die kurz vor der vorderen Stirnwand 14 enden. Auf diese Weise bleiben seitlich neben dem Schlitz 22 zwei schmale Stege stehen. Nach der vollständigen Montage des Fensterrollos 12, werden die beiden Führungsschienenabschnitte 67, der beiden Führungsscheinen 13 nach innen geklappt, wobei sich die Führungsschienen an den Sollbiegestellen 73 mit einem entsprechenden Radius biegen. Nachdem Einbauen der Befestigung der Lagerböcke 24, werden die Führungsschienen 13 an den Sollbiegestellen 73 wieder zurückgebogen in die gewünschte Lage. Die Sollbiegestellen 73 wirken dabei als Scharniere, die sich genügend häufig biegen lassen, ohne dass es zum Bruch kommt. Hierbei ist es wichtig, eine entsprechende große Tiefe der Einschnitte 74 zu gewährleisten.

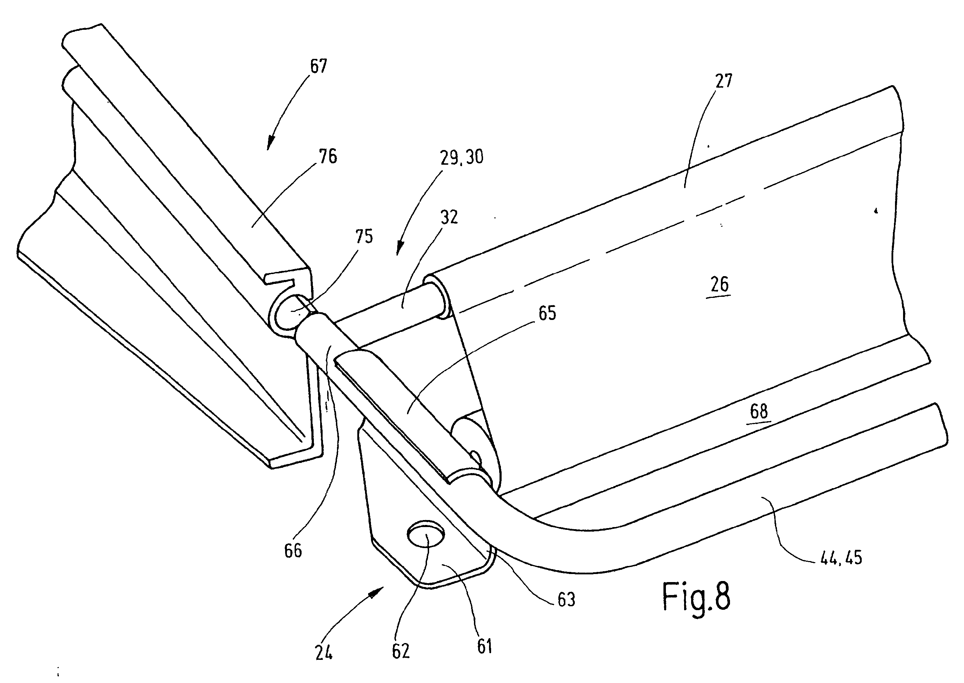

Neben dem Fenster enthält die Karosserie üblicherweise eine Innenverkleidung. Diese kann zur Bildung eines Abschnitts der Führungsschiene 13 herangezogen werden. Fig. 8 zeigt eine Ausführungsform, bei der der zweite Abschnitt 67 der Führungsschiene 13 kein eigenes Führungschienenprofil ist. Vielmehr ist hierbei der Abschnitt 67 als Nut 75 in einem Innenverkleidungsstück 76 der C-Säule 4 bzw. 5 enthalten ist. Die Nut 75 entspricht in ihrem Querschnitt exakt der Nut 21 mit dem Schlitz 22.

Bei diesem Ausführungsbeispiel geschieht die Montage, indem nach dem Anbringen der zuvor erwähnten Baueinheit die Innenverkleidungstücke 76 in der Karosserie befestigt werden. Nicht gezeigte Positioniermittel sorgen dafür, dass die Nut 75 mit der Nut 21 in dem jeweiligen Abschnitt 66 fluchtet.

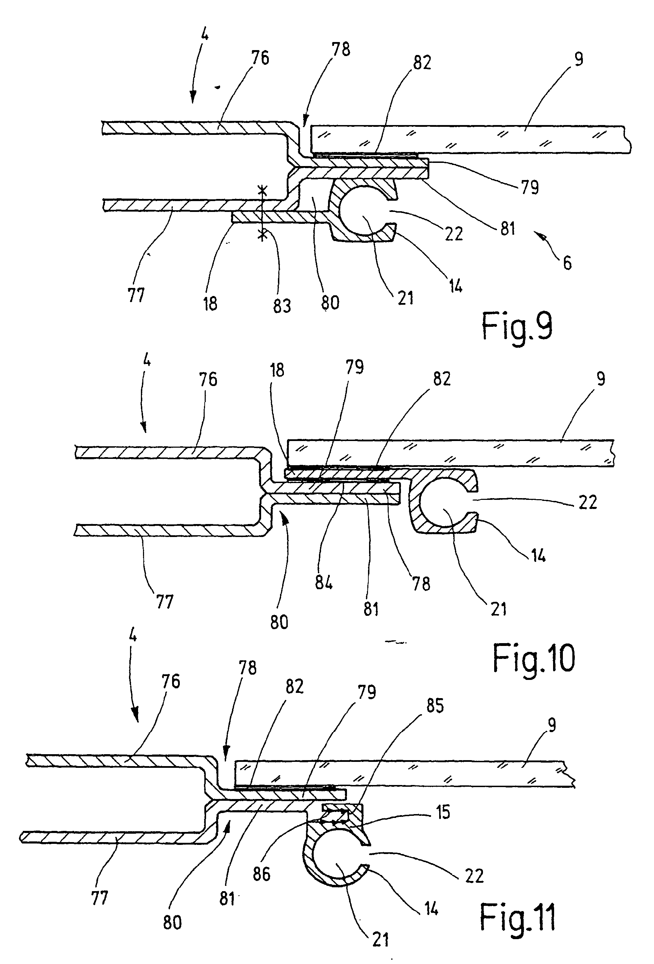

Die Art und Weise wie die Führungsschiene 13 mit der Karosserie des Pkw 1 verbunden ist, zeigt stark schematisiert Fig. 9. In Fig. 9 ist ein Schnitt durch die Fahrzeugkarosserie des Kraftfahrzeugs 1 gezeigt, und zwar ein horizontaler Schnitt, beispielsweise durch die C-Säule 4. Wie zu erkennen ist, setzt sich die C-Säule 4 aus zwei Blechformteilen, einem äußeren Blechformteil 76 und einem Inneren Blechformteil 77 zusammen. Da im Zusammenhang mit der Erfindung nur jener unmittelbar an das Heckfenster 6 angrenzende Bereich interessiert, ist auch nur dieser schematisiert veranschaulicht. Das äußere Blechformteil 76 bildet bei dem Heckfenster 6 einen Falz 78, der in einem Blechflansch 79 ausläuft. Das innere Blechformteil 77 ist ebenfalls mit einem Falz 79 versehen, der in einem Flansch 81 endet. Die beiden Flansche 79 und 81 sind gerade Flansche, in dem Sinne als ihre Erzeugende eine Gerade ist, die rechtwinklig zu dem Rand verläuft und in der Ebene der Heckfensteröffnung 6 liegt.

Die beiden Flansche 79 und 81 sind in bekannter Weise durch Punktschweißen stoffschlüssig miteinander verbunden. Auf der Außenseite des Flansches 79 ist gegebenenfalls unter Zwischenlage einer Ausgleichs- und Klebemasse 82 die Heckscheibe 9 randseitig aufgeklebt.

Die Nut 21 liegt in dem Falz 80. Derjenige Teil der Führungsschiene 13, der neben der Heckfensteröffnung 6 verläuft, ist mit Hilfe des Flansches 18 an der zum Fahrzeuginnenraum zeigenden Fläche des inneren Blechformteils 77 neben dem Falz 80 befestigt. Die Befestigung erfolgt beispielsweise durch Schrauben oder Nieten, wie dies schematisch bei 83 angedeutet ist. Die Schrauben oder Nieten führen durch Bohrungen in dem Flansch 18 und des Blechformteils 77 hindurch.

Es versteht sich, dass sich die Führungsschiene 13 an der Unterkante, d.h. im Bereich der Fensterunterkante 8 allmählich von dem Flansch 81 entfernt und in Richtung auf die Lagerböcke 24 wegführt. Die Baueinheiten, wie sie in den Figuren 5 und 8 gezeigt sind, sind zumindest einschließlich des Abschnittes 66 der Führungsschienen 13 unterhalb der Hutablage 9 angeordnet, weshalb die Führungsschienen 13 sich in diesem Bereich selbstverständlich von dem Falz 81 entfernen müssen.

Der wesentliche Vorteil der Anordnung nach Fig. 9 besteht darin, dass der voluminöse Teil der Führungsschiene 13, nämlich jener Teil mit der Führungsnut 21 in dem inneren Falz 80 enthalten ist, so dass er nicht zu Verstärkung der Karosseriedicke einschließlich der Innenverkleidung in diesem Bereich beiträgt. Andererseits befindet sich die Führungsschiene 13 in unmittelbarer Nähe zu dem sichtbaren Rand gebildet durch die freie Kante des Flansches 79 bzw. 81.

Die Befestigung gemäß Fig. 9 eignet sich auch für solche Karosserieteile wie beispielsweise Fahrzeugtüren, bei denen kein Flansch vorhanden ist, weil die Scheiben in Führungen verschieblich geführt ist.

Fig. 10 zeigt eine Verbindung, bei der der Flansch 18 der Führungsschiene 13 zwischen dem Flansch 78 und der Scheibe 9 eingefügt ist. Hierzu ist der Flansch 18 wie gezeigt seitlich versetzt und mündet tangential in jenen Querschnittsbereich der Führungsschiene 13 ein, in dem die Nut 21 enthalten ist.

Zum Befestigen der Führungsschiene 13 gemäß Fig. 10 wird der Flansch 18 mittels einer Klebemasse 84 auf der Außenseite des Flansches 79 festgeklebt. Der Flansch 18 bildet seinerseits wieder die Trag- und Haltefläche für die Scheibe 9, die auf dem Flansch 18 in der gleichen Weise befestigt ist, wie bei Fig. 9 auf dem Flansch 79.

Bei der Ausführungsform nach Fig. 10 wird die Fensterinnenkante unmittelbar von der Seite 14 der Führungsschiene 13 gebildet.

Bei Fig. 11 ist der Flansch 18 keine gerade Leiste, die von zwei voneinander parallelen Flächen begrenzten ist, sondern der Flansch 18 ist abgewinkelt und beispielweise an der Fläche 15 angeformt. Dadurch entsteht eine weitere Nut 85, die über die Länge der Führungsschiene 13 zumindest über die Höhe des Fensters durchläuft. Die Nut 85 ist so bemessen, dass sie einen abgekröpften Schenkel 86 des inneren Flanschs 81 aufnehmen kann. Der Flansch 81 ist dazu an seiner freien, in Richtung auf die Mitte der Fensteröffnung 6 zeigenden Kante abgekröpft, um einen von dem Flansch 78 beabstandeten Schenkel zu bilden, auf den Führungsschiene 13 mit der Nut 85 aufgesteckt werden kann.

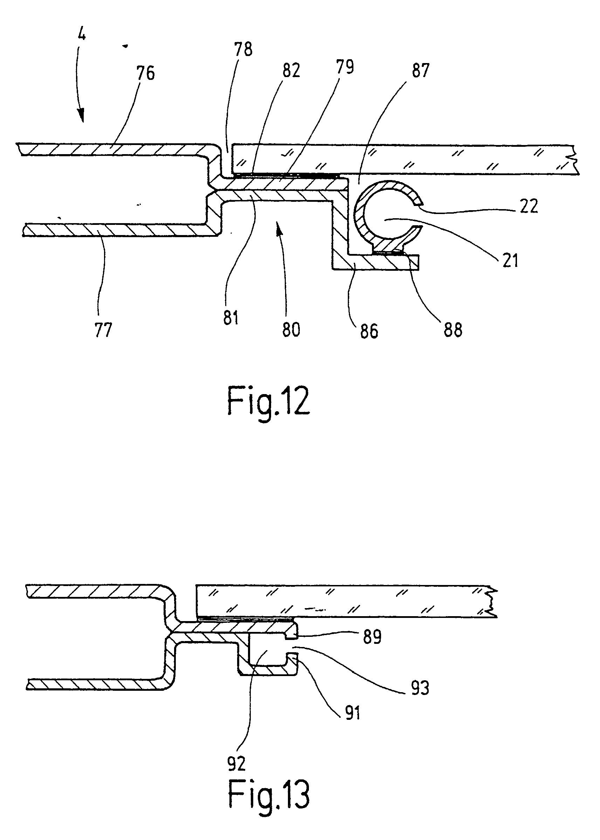

Fig. 12 zeigt eine Anordnung, bei der die in Fig. 11 vorgenommene Abkröpfung eine größere räumliche Tiefe hat, so dass der Schenkel 86 von der Innenseite der Heckfensterscheibe 9 einen Abstand hat, der eine größere nutförmige Kammer 87 entstehen lässt. Die Abmessungen der nutförmigen Kammer 87 reichen aus, um dort die Führungsschiene 13 unterzubringen. Die Führungsschiene 13 ist in diesem Falle ohne den Flansch 18 ausgeführt und hat statt dessen eine gerade Seitenfläche 88 mit der sie auf dem Schenkel 86 aufgeklebt ist. Die Führungsschiene 13 befindet sich innerhalb der Kammer 87 zwischen dem Schenkel 86 und der Innenseite der Heckfensterscheibe 9.

Die Heckfensterscheibe 9 ist in der gleichen Weise befestigt, wie dies im Zusammenhang mit Fig. 9 erläutert ist.

Wie bei einigen Ausführungsbeispielen gezeigt, braucht der Außenquerschnitt der Führungsschiene 13, notwendiger Weise quadratisch zu sein. Er kann auch zylindrisch gestaltet sein.

Fig. 13 zeigt ein Ausführungsbeispiel bei dem der Abschnitt 67 der Führungsschiene 13 durch die Karosserie selbst gebildet ist. Der Flansch 79 ist an seiner freien Kante mit einer einstückigen Leiste 89 versehen, die von der Scheibe 9 weg zeigt. Der Schenkel 86 trägt an seinem freien Ende ebenfalls eine Leiste 91, die mit der Leiste 89 fluchtet und auf diese zu zeigt. Hierdurch entsteht eine Nut 92 mit Schlitz 93, die im Querschnitt der Nut 21 mit dem Schlitz 22 entspricht. Beim Einbau der zuvor erwähnten Baueinheit wird der Abschnitt 66 mit der Nut 92 fluchtend in Verbindung gebracht, womit die vollständige Führungsschiene 13 entsteht.

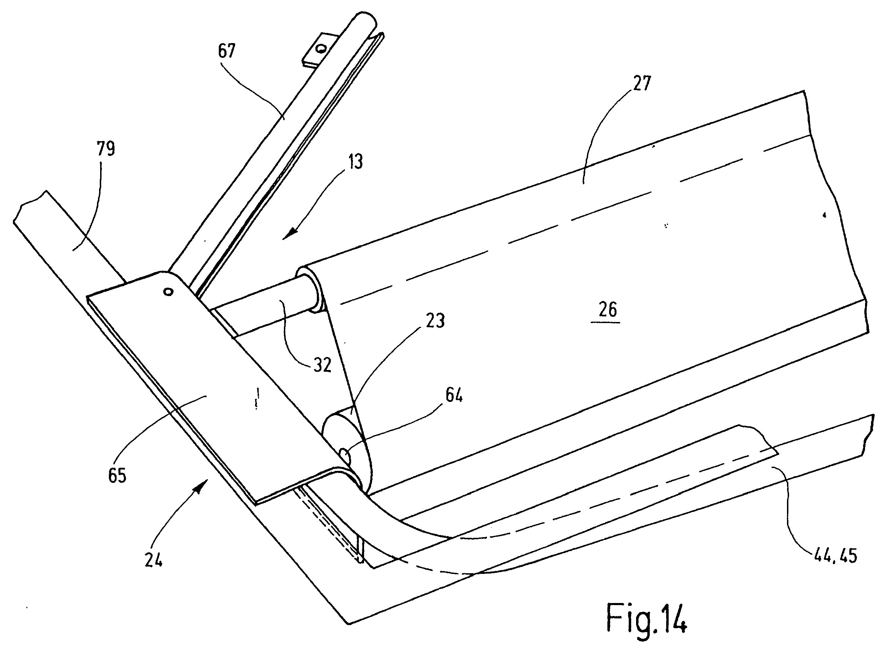

Darüber hinaus lassen die Figuren 9 - 13 unschwer erkennen, dass das Fensterrollo 12 montiert werden kann, noch bevor die Scheibe 9 eingeklebt ist. Das Fensterrollo 12 wird dazu von außen auf die Fensteröffnung aufgelegt und es werden die Führungsschienen 13 von außen her mit den Flanschen 79 und/oder 81 verbunden. Dabei läßt sich die Montage noch weiter vereinfachen, wenn wie Fig. 14 zeigt, der Flansch 65 des Lagerbocks 24 gleichezeitig auch als Montageflansch dient, indem er ein entsprechendes Stück verlängert ist. Er wird in diesem Falle von außen auf die Außenseite des Flansches 79 aufgeklebt.

Ein Fensterrollo umfasst eine vormontierte Einheit, bestehend wenigstens aus der Wickelwelle, den zugehörigen Lagerstücken und einem die Lagerstücke verbindenden Rahmenrohr. Außerdem gehören zu der vormontieren Baueinheit der elektrische Antriebsmotor und Führungsrohre zu Führen von Schubgliedern zur Betätigung der Rollobahn. Die Rollbahn ist mit einem Zugstab verbunden, der endseitig in Führungsschienestücken geführt ist, die ebenfalls Bestandteil der Baueinheit sind.

Bei einer Fahrzeugkarosserie, ist ein Flansch zur Befestigung einer Scheibe vorgesehen. Der Flansch dient gleichzeitig als Befestigung für die Führungsschienen, damit diese möglichst dicht an die Scheibenöffnung herankommen ohne störend in Erscheinung zu treten.

## Patentansprüche

1. Fensterrollo (12) zum Regulieren des Lichteintritts durch ein Fenster in einen Innenraum eines Kraftfahrzeugs,
- mit wenigstens einer Wickelwelle (23),
- mit Lagermitteln (24), in denen die Wickelwelle (23) drehbar gelagert ist,
- mit Verbindungsmitteln (68), mittels derer die Lagermittel (24) miteinander verbunden sind, wobei die Lagermittel (24) und/oder die Verbindungsmittel (68) zum Anbringen an dem Kraftfahrzeug (1) eingerichtet sind,
- mit wenigstens einer Rollobahn (26), die mit einer Kante an der Wickelwelle (23) befestigt ist,
- mit wenigsten einem Paar von Führungsschienen (13), von denen sich jede zumindest ein Stück weit seitlich neben der aufgespannten Rollobahn (26) erstreckt und die jeweils wenigsten eine Führungsnut (21) enthalten,
- mit einem Zugstab (28), der mit einer von der Wickelwelle (23) abliegenden Kante (27) der Rollobahn (26) verbunden ist und der endseitig in den Führungsnuten (21) geführt ist, und
- mit einer Antriebseinrichtung (35) zum Bewegen des Zugstabs (28) längs der Führungsschienen (13) und zum Drehen der Wickelwelle (23), wobei
- jede Führungsschiene (13) in einen ersten und einen zweiten Abschnitt (66,67) aufgeteilt ist, von denen der erste Abschnitt (66) mit dem Lagermittel (24) verbunden ist und eine Länge aufweist, derart, dass er sich nur ein kurzes Stück, bezogen auf die Gesamtlänge der Führungsschiene (13), über den Zugstab (28) hinaus erstreckt, wenn sich das Fensterrollo (12) in der eingefahrenen Stellung befindet.

2. Fensterrollo nach Anspruch 1, **dadurch gekennzeichnet, dass** die Wickelwelle (23) rohrförmig ist und einen zu der Antriebseinrichtung (35) gehörenden Federmotor (25) enthält.

3. Fensterrollo nach Anspruch 1, **dadurch gekennzeichnet, dass** das Lagermittel (24) einen Montageflansch (61,65) zur Befestigung in dem Kraftfahrzeug (1) aufweist.

4. Fensterrollo nach Anspruch 1, **dadurch gekennzeichnet, dass** das Lagermittel (24) ein Blechbiegeteil ist.

5. Fensterrollo nach Anspruch 1, **dadurch gekennzeichnet, dass** Montageflansch (61,65) zur stoff- und/oder formschlüssigen Befestigung an dem Kraftfahrzeug (1) eingerichtet ist.

6. Fensterrollo nach Anspruch 1, **dadurch gekennzeichnet, dass** die Rollobahn (25) einen dem Fenster angenäherten Zuschnitt aufweist.

7. Fensterrollo nach Anspruch 1, **dadurch gekennzeichnet, dass** die Führungsmittel (13) zumindest abschnittsweise mit den Lagermitteln (24) und den Verbindungsmitteln (68) zu einer vorgefertigten Baueinheit verbunden sind.

8. Fensterrollo nach Anspruch 1, **dadurch gekennzeichnet, dass** das Führungsmittel (13) einen Verlauf aufweist, der dem zugeordneten Rand des Fensters entspricht.

9. Fensterrollo nach Anspruch 1, **dadurch gekennzeichnet, dass** die Führungsschiene (13) dazu eingerichtet ist, zumindest abschnittsweise stoff- und/oder formschlüssig mit dem Fahrzeug (1) verbunden zu werden.

10. Fensterrollo nach Anspruch 1, **dadurch gekennzeichnet, dass** die Führungsschiene (13) mit wenigstens einer durchgehenden Fläche (19,20,88) versehen ist, deren Erzeugende eine Gerade ist, die rechtwinklig zu der Längsachse der Führungsschiene (13) verläuft.

11. Fensterrollo nach Anspruch 1, **dadurch gekennzeichnet, dass** die Führungsschiene (13) zwei zueinander parallele Flächen (19,20) aufweist, deren Erzeugende Geraden sind, die rechtwinklig zu der Längsachse der Führungsschiene (13) ausgerichtet sind.

12. Fensterrollo nach Anspruch 1, **dadurch gekennzeichnet, dass** die Führungsschiene (13) an ihrer von dem Nutenschlitz (22) abliegenden Seite (17) mit einem Befestigungsflansch (18) versehen ist, der dazu eingerichtet ist, mit dem Fahrzeug (1) stoff- und/oder formschlüssig verbunden zu werden.

13. Fensterrollo nach Anspruch 1, **dadurch gekennzeichnet, dass** der zweite Abschnitt (67) in einem Seitenverkleidungsteil (76) des Kraftfahrzeugs (1) untergebracht oder ausgebildet ist.

14. Fensterrollo nach Anspruch 1, **dadurch gekennzeichnet, dass** die beiden Abschnitte (66,67) über ein Scharnier (71,72,73) miteinander verbunden sind.

15. Fensterrollo nach Anspruch 14, **dadurch gekennzeichnet, dass** die Schwenkachse (71) des Scharniers (71,72,73) rechtwinklig zu der Drehachse der Wickelwelle ()23 verläuft.

16. Fensterrollo nach Anspruch 14, **dadurch gekennzeichnet, dass** das Scharnier (71,72,73) ein Filmscharnier oder eine Sollbiegestelle ist.

17. Fensterrollo nach Anspruch 1, **dadurch gekennzeichnet, dass** die beiden Abschnitte (66,67) der Führungsschiene (13) über eine Steckverbindung miteinander verbunden sind.

18. Fensterrollo nach Anspruch 1, **dadurch gekennzeichnet, dass** der Zugstab (28) aus einem Mittelstück und zwei teleskopartig gegenüber dem Mittelstück bewegbaren Endstücken (29,30) zusammengesetzt ist, wobei die Endstücke (29,30) in der betreffenden Führungsschiene (13) verschieblich geführt sind.

19. Fensterrollo nach Anspruch 1, **dadurch gekennzeichnet, dass** die Antriebseinrichtung (35) wenigstens zwei Antriebsglieder (46,47) aufweist, die getrieblich zwischen einem elektrischen Antriebsmotor (36) und dem Zugstab (28) angeordnet sind.

20. Fensterrollo nach Anspruch 19, **dadurch gekennzeichnet, dass** die Antriebsglieder (46,47) Schubglieder sind.

21. Fensterrollo nach Anspruch 19, **dadurch gekennzeichnet, dass** die Antriebsglieder (46,47) linienförmige Glieder sind.

22. Fensterrollo nach Anspruch 19, **dadurch gekennzeichnet, dass** die Antriebsglieder (46,47) an ihrer Außenumfangsfläche eine Verzahnung (49) tragen.

23. Fensterrollo nach Anspruch 19, **dadurch gekennzeichnet, dass** die Antriebseinrichtung (46,47) einen Getriebemotor (38) aufweist, auf dessen Ausgangswelle (42) ein Zahnrad (43) sitzt, das formschlüssig mit den Antriebsgliedern (46,47) zusammenwirkt.

24. Fensterrollo nach Anspruch 19, **dadurch gekennzeichnet, dass** für die Antriebsglieder (46,47) Führungsrohre (44,45) vorgesehen sind, die von dem Antriebsmotor (36) bis zu einem Ende einer betreffenden Führungsschiene (13) führen.

25. Fensterrollo nach Anspruch 24, **dadurch gekennzeichnet, dass** die Führungsrohre (44,45) dasselbe Querschnittsprofil aufweisen wie die Führungsschienen (13).

26. Fensterrollo nach Anspruch 23, **dadurch gekennzeichnet, dass** der Getriebemotor (36) an dem Verbindungsmittel (68) angebracht ist.

27. Fensterrollo nach Anspruch 1, **dadurch gekennzeichnet, dass** das Verbindungsmittel (68), die Lagermittel (24) zusammen mit der Wickelwelle (23), den Führungsrohren (44,45), dem Antriebsmotor (36) und zumindest Abschnitten (66) der Führungsschienen (13) eine vormontierte Einheit zur Montage in dem Fahrzeug (1) bilden.

28. Fensterrollo nach Anspruch 1, **dadurch gekennzeichnet, dass** zumindest ein Abschnitt (67) der Führungsschienen (13) ein integraler Bestandteil einer Tür oder einer Karosserie des Fahrzeugs ist.

## Claims

1. Window roller blind (12) for regulating the entry of light through a window into an interior of a motor vehicle,
• with at least one winding shaft (23),
• with bearing elements (24), in which the winding shaft (23) is rotatably disposed,
• with connecting elements (68), by means of which the bearing elements (24) are connected to one another, wherein the bearing elements (24) and/or the connecting elements (68) are fitted for attachment to the motor vehicle (1),
• with at least one blind sheet (26), which is fastened to the winding shaft (23) at one edge,
• with at least one pair of guide rails (13), each of which extends for at least a short distance laterally next to the opened out blind sheet (26) and which respectively contain at least one guide groove (21),
• with a pull rod (28), which is connected to an edge (27) of the blind sheet (26) remote from the winding shaft (23) and is guided in the guide grooves (21) at the ends, and
• with a drive means (35) for moving the pull rod (28) along the length
of the guide rails (13) and for rotating the winding shaft (23), wherein each guide rail (13) is divided into a first and a second section (66, 67), of which the first section (66) is connected to the bearing element (24) and has a length such that it extends for only a short distance, in relation to the full length of the guide rail (13), beyond the pull rod (28) when the window roller blind (12) is situated in the retracted position.

2. Window roller blind according to Claim 1, **characterised in that** the winding shaft (23) is tubular and contains a spring motor (25) belonging to the drive means (35).

3. Window roller blind according to Claim 1, **characterised in that** the bearing element (24) has a mounting flange (61, 65) for fastening in the motor vehicle (1).

4. Window roller blind according to Claim 1, **characterised in that** the bearing element (24) is a sheet metal bent part.

5. Window roller blind according to Claim 1, **characterised in that** the mounting flange (61, 65) is fitted for integral and/or positive fastening to the motor vehicle (1).

6. Window roller blind according to Claim 1, **characterised in that** the blind sheet (25) has a blank approximating the window.

7. Window roller blind according to Claim 1, **characterised in that** the guide elements (13) are connected, at least in sections, to the bearing elements (24) and the connecting elements (68) to form a prefabricated structural unit.

8. Window roller blind according to Claim 1, **characterised in that** the guide element (13) has a course, which corresponds to the associated edge of the window.

9. Window roller blind according to Claim 1, **characterised in that** the guide rail (13) is fitted to be connected, at least in sections, integrally and/or positively to the vehicle (1).

10. Window roller blind according to Claim 1, **characterised in that** the guide rail (13) is provided with at least one continuous surface (19, 20, 88), the generatrix of which is a straight line running at right angles to the longitudinal axis of the guide rail (13).

11. Window roller blind according to Claim 1, **characterised in that** the guide rail (13) has two mutually parallel surfaces (19, 20), the generatrices of which are straight lines running at right angles to the longitudinal axis of the guide rail (13).

12. Window roller blind according to Claim 1, **characterised in that** on its side (17) remote from the groove slot (22) the guide rail (13) is provided with a fastening flange (18), which is fitted to be connected integrally and/or positively to the vehicle (1).

13. Window roller blind according to Claim 1, **characterised in that** the second section (67) is housed or configured in a side lining part (76) of the motor vehicle (1).

14. Window roller blind according to Claim 1, **characterised in that** the two sections (66, 67) are connected to one another via a hinge (71, 72, 73).

15. Window roller blind according to Claim 14, **characterised in that** the pivot axis (71) of the hinge (71, 72, 73) runs at right angles to the rotational axis of the winding shaft (23).

16. Window roller blind according to Claim 14, **characterised in that** the hinge (71, 72, 73) is a film hinge or a predetermined bending point.

17. Window roller blind according to Claim 1, **characterised in that** the two sections (66, 67) of the guide rail (13) are connected to one another via a plug connection.

18. Window roller blind according to Claim 1, **characterised in that** a pull rod (28) is assembled from a central piece and two end pieces (29, 30) telescopically movable relative to the central piece, wherein the end pieces (29, 30) are displaceably guided in the respective guide rail (13).

19. Window roller blind according to Claim 1, **characterised in that** the drive means (35) has at least two drive members (46, 47), which are operatively arranged between an electric drive motor (36) and the pull rod (28).

20. Window roller blind according to Claim 19, **characterised in that** the drive members (46, 47) are pushing members.

21. Window roller blind according to Claim 19, **characterised in that** the drive members (46, 47) are linear members.

22. Window roller blind according to Claim 19, **characterised in that** the drive members (46, 47) bear a tooth system (49) on their outer peripheral surface.

23. Window roller blind according to Claim 19, **characterised in that** the drive means (46, 47) has a geared motor (38), on the output shaft (42) of which a gear wheel (43) sits, which cooperates positively with the drive members (46, 47).

24. Window roller blind according to Claim 19, **characterised in that** guide tubes (44, 45) are provided for the drive members (46, 47) for guidance from the drive motor (36) as far as an end of a respective guide rail (13).

25. Window roller blind according to Claim 24, **characterised in that** the guide tubes (44, 45) have the same cross-sectional profile as the guide rails (13).

26. Window roller blind according to Claim 23, **characterised in that** the geared motor (36) is attached to the connecting element (68).

27. Window roller blind according to Claim 1, **characterised in that** the connecting element (68), the bearing elements (24) together with the winding shaft (23), the guide tubes (44, 45), the drive motor (36) and at least sections (66) of the guide rails (13) form a pre-assembled unit for assembly in the vehicle (1).

28. Window roller blind according to Claim 1, **characterised in that** at least one section (67) of the guide rails (13) is an integral component of a door or a body of the vehicle.

## Revendications

1. Store à enrouleur de fenêtre (12) pour régler l'entrée de la lumière dans l'habitacle d'un véhicule à travers la fenêtre, qui comporte :
- au moins un arbre d'enroulement (23),
- des moyens de palier (24) dans lesquels est monté tournant l'arbre d'enroulement (23),
- des moyens de liaison (68) par lesquels les moyens de palier (24) sont reliés entre eux, les moyens (24) et/ou les moyens (68) étant conçus pour être montés sur le véhicule automobile (1),
- au moins une bande de store (26) qui est fixée par un bord à l'arbre d'enroulement (23),
- au moins une paire de rails de guidage (13) dont chacune s'étend en étant au moins un peu écartée latéralement le long de la bande de store (26) et présente au moins une rainure de guidage (21),
- une tige de tension (28) qui est reliée à un bord (27) de la bande de store (26) éloigné de l'arbre d'enroulement (23) et qui est guidée par ses extrémités dans les rainures de guidage (21),
- un dispositif d'entraînement (35) pour déplacer la tige de tension (28) le long des rails de guidage (13) et pour faire tourner l'arbre d'enroulement (23),
étant précisé que chaque rail de guidage (13) est divisé en une première et en une seconde section (66, 67) dont la première (66) est reliée au moyen de palier (24) et présente une longueur telle que, par rapport à la longueur totale du rail de guidage (13), elle dépasse seulement un peu la tige de tension (28) quand le store à enrouleur de fenêtre (12) est en position rentrée.

2. Store à enrouleur de fenêtre selon la revendication 1, **caractérisé en ce que** l'arbre d'enroulement (23) a la forme d'un tube et contient un moteur élastique (25) faisant partie du dispositif d'entraînement (35).

3. Store à enrouleur de fenêtre selon la revendication 1, **caractérisé en ce que** le moyen de palier (24) présente une bride de montage (61, 65) pour fixation dans le véhicule automobile (1).

4. Store à enrouleur de fenêtre selon la revendication 1, **caractérisé en ce que** le moyen de palier (24) est une pièce pliée en tôle.

5. Store à enrouleur de fenêtre selon la revendication 1, **caractérisé en ce que** la bride de montage (61, 65) est conçue pour être fixée au véhicule automobile (1) avec verrouillage par combinaison de formes ou par la matière.

6. Store à enrouleur de fenêtre selon la revendication 1, **caractérisé en ce que** la bande de store (25) présente une coupe qui est proche de la forme de la fenêtre.

7. Store à enrouleur de fenêtre selon la revendication 1, **caractérisé en ce que** les rails de guidage (13) sont reliés au moins en partie aux moyens de palier (64) et aux moyens de liaison (68) pour donner une unité constructive préassemblée.

8. Store à enrouleur de fenêtre selon la revendication 1, **caractérisé en ce que** le rail de guidage (13) présente un tracé qui correspond au bord associé de la fenêtre.

9. Store à enrouleur de fenêtre selon la revendication 1, **caractérisé en ce que** le rail de guidage (13) est conçu de manière à pouvoir être relié au moins en partie au véhicule (1) avec verrouillage par combinaison de formes et/ou par la matière.

10. Store à enrouleur de fenêtre selon la revendication 1, **caractérisé en ce que** le rail de guidage (13) présente au moins une surface continue (10, 20, 28) ayant pour génératrice une droite perpendiculaire à l'axe longitudinal du rail de guidage (13).

11. Store à enrouleur de fenêtre selon la revendication 1, **caractérisé en ce que** le rail de guidage (13) présente au moins deux surfaces (19, 20) parallèles entre elles, dont les génératrices sont des droites perpendiculaire à l'axe longitudinal du rail de guidage (13).

12. Store à enrouleur de fenêtre selon la revendication 1, **caractérisé en ce que** le rail de guidage (13), sur son côté éloigné de la fente de rainure (22), présente une bride de fixation (18) qui est conçue pour être reliée au véhicule (1) avec verrouillage par combinaison de formes et/ou par la matière.

13. Store à enrouleur de fenêtre selon la revendication 1, **caractérisé en ce que** la seconde section (67) du rail de guidage est disposée ou réalisée dans une pièce de revêtement latéral (76) du véhicule automobile (1).

14. Store à enrouleur de fenêtre selon la revendication 1, **caractérisé en ce que** les deux sections (66, 67) sont reliées entre elles par une charnière (71, 72, 73).

15. Store à enrouleur de fenêtre selon la revendication 14, **caractérisé en ce que** l'axe de basculement de la charnière (71, 72, 73) est perpendiculaire à l'axe de rotation de l'arbre d'enroulement (23).

16. Store à enrouleur de fenêtre selon la revendication 14, **caractérisé en ce que** la charnière (71, 72, 73) est une charnière pelliculaire ou un point de pliage imposé.

17. Store à enrouleur de fenêtre selon la revendication 1, **caractérisé en ce que** les deux sections (66, 67) du rail de guidage (3) sont reliées entre elles par enfichage.

18. Store à enrouleur de fenêtre selon la revendication 1, **caractérisé en ce que** la tige de tension (28) est constituée d'une partie médiane et de deux parties d'extrémité (29, 30) qui se déplacent télescopiquement par rapport à la partie médiane et qui sont guidées par coulissement dans le rail de guidage (13) correspondant.

19. Store à enrouleur de fenêtre selon la revendication 1, **caractérisé en ce que** le dispositif d'entraînement (35) comprend au moins deux organes d'entraînement (46, 47) qui sont disposés en entraînement entre un moteur électrique d'entraînement (36) et la tige de tension (28).

20. Store à enrouleur de fenêtre selon la revendication 19, **caractérisé en ce que** les organes d'entraînement (46, 47) sont des organes coulissants.

21. Store à enrouleur de fenêtre selon la revendication 19, **caractérisé en ce que** les organes d'entraînement (46, 47) sont des organes de forme linéaire.

22. Store à enrouleur de fenêtre selon la revendication 19, **caractérisé en ce que** chaque organe d'entraînement (46, 47) porte sur sa surface périphérique externe une denture (49).

23. Store à enrouleur de fenêtre selon la revendication 19, **caractérisé en ce que** le dispositif d'entraînement (35) présente un motoréducteur dont l'arbre de sortie (42) porte un pignon denté (43) coopérant par combinaison de formes avec les organes d'entraînement (46, 47).

24. Store à enrouleur de fenêtre selon la revendication 19, **caractérisé en ce qu'**il est prévu pour les organes d'entraînement (46, 47) des tubes de guidage (44, 45) qui vont du moteur d'entraînement (36) jusqu'à une extrémité d'un rail de guidage (13) correspondant.

25. Store à enrouleur de fenêtre selon la revendication 24, **caractérisé en ce que** les tubes de guidage (44, 45) présentent en section transversale le même profil que les rails de guidage (13).

26. Store à enrouleur de fenêtre selon la revendication 23, **caractérisé en ce que** le motoréducteur (36) est monté sur le moyen de liaison (68).

27. Store à enrouleur de fenêtre selon la revendication 1, **caractérisé en ce que** le moyen de liaison (68), les moyens de palier (24) avec l'arbre d'enroulement (23), les tubes de guidage (44, 45), le moteur d'entraînement (36) et au moins les sections (66) des rails de guidage (31) constituent une unité préassemblée pour montage dans le véhicule (1).

28. Store à enrouleur de fenêtre selon la revendication 1, **caractérisé en ce qu'**au moins une partie (67) des rails de guidage (13) est un composant intégral d'une porte ou d'une carrosserie du véhicule.
